# EUROPEAN PATENT SPECIFICATION

(11) **EP 3 375 309 B1**
(45) Date of publication and mention of the grant of the patent: **16.06.2021**
(21) Application number: 17161447.2
(22) Date of filing: 16.03.2017
(51) Int. Cl.: A41D 19/00

(54) **SMART PROTECTIVE GLOVES WITH SEALED COLORIMETRIC LAYER**
INTELLIGENTE SCHUTZHANDSCHUHE MIT ABGEDICHTETER KOLORIMETRISCHER SCHICHT
GANTS DE PROTECTION INTELLIGENTS AYANT UNE COUCHE COLORIMÉTRIQUE ÉTANCHE

(43) Date of publication of application: 19.09.2018
(73) Proprietor: Honeywell International Inc., Morris Plains, NJ 07950 (US)
(72) Inventor: COBIANU, Cornel P., Morris Plains, NJ 07950 (US); STRATULAT, Alisa, Morris Plains, NJ 07950 (US); SERBAN, Bogdan-Catalin, Morris Plains, NJ 07950 (US); BUIU, Octavian, Morris Plains, NJ 07950 (US); PIESKER, Andrea, Morris Plains, NJ 07950 (US); FARIN, Eric, Morris Plains, NJ 07950 (US)
(74) Representative: Haseltine Lake Kempner LLP

(56) References cited:
- EP-A1- 3 165 104
- US-A- 5 017 427
- US-A1- 2014 289 926

## Description

### BACKGROUND

The protective gloves for process industries (*e.g*., petrochemical, chemical, food, beverage, and pharmaceutical) have a very robust technology, able to assure people safety under harsh chemical, mechanical and electrical conditions. Glove suppliers provide a large catalog of products, where different types of gloves are recommended for different type of chemicals to be handled with. This means that depending on the application and chemical products to which they are exposed, the gloves have a different type of material and a different thickness of the layers from which they are made of. These gloves have to pass mechanical (EN 388), thermal (EN511) and chemical European standards (EN 374-2, EN 374-3) before they are sent to the market.

In addition to these standards, the gloves should comply with the standard EN 420, which specifies general criteria for comfort, size, dexterity, labeling, and heavy metal content and pH content. Each standard defines exact test and acceptance conditions for the gloves exposed to critical mechanical, thermal, chemical agents. For each standard there are up to five levels of performance, where the first level specifies the test and acceptance conditions for the least aggressive value of the externally applied agent and the highest level (4 or 5) is associated with the most aggressive value of the externally applied agent.

For example, the standard EN-374-2 characterizes the permeability features of the gloves and it specifies a method for testing the protective gloves resistance to permeation of chemical products (penetration). The standard EN374-3 includes the standard EN 374-2 requirements, and in addition, it requires that the protective glove to pass the performance level 2 of chemical resistance for at least three chemical products, like methanol, sulphuric acid 96%, 40% sodium hydroxide, tetrahydrofuran, acetone, carbon disulphide, ethyl acetate, etc. This performance level 2 for chemical resistance means that the permeation time (test made according to the standard) should be higher than or equal to 30 minutes, when the glove is exposed continuously to that chemical.

Typical gloves for chemical protection during handling of acids and alkalis, for example, include latex gloves that can be used in harsh applications for food and beverage industry where cleaning with high concentrated cleaning agents are the most used. Such latex gloves meet the above standard and they are also accompanied by a wide list of permeation data.

Use of gloves in the field usually is not accompanied by evidence of the time of use during their lifetime, and so in many cases the gloves should be used for a much shorter time with respect to their designed lifetime. On the other hand, the suppliers themselves may be conservative in specifying the level of performance, which means that even if the real level of performance may be 4, the supplier would specify 3
US 5 017 427 discloses a laminate for multilayer gloves, having a function of an indicator, comprising a transparent outer layer; inner layer, each comprising a substantially acid or alkali resistant material; and an intermediate layer containing an acid or alkali indicator which changes color upon contact with an acid or an alkali.

### SUMMARY OF THE INVENTION

The present invention provides gloves and methods for estimating the remaining time of glove operation before removing the glove, or what is termed "near-end of service life indication" (NESLI). The invention provides for this purposes a NESLI protective glove that very rapidly indicates the remaining service time by means of colorimetric principles based on the use of a "sealed" or protected colorimetric (indicator) layer with high water solubility. Such an indicator layer contains a pH indicator. The organic solutions that are used for the fabrication of gloves made of nitrile or latex, for instance, have a pH of about 10. Thus, in this context the protective layers insulate the indicator layer during glove fabrication so as to prevent the pH indicators in the indicator layer from reacting to the organic solutions during the fabrication process. After a certain period of time of use in harsh chemicals, the outer surface of a completed glove shows immediate color change with respect to its background color. Such an event can signify, for example, that the remaining lifetime for operation is equal to about 10% of its entire life.

The invention thus provides in one embodiment, optionally in combination with any other embodiment according to the dependent claims, at least one inner layer (230) having a thickness ti, a top surface, and a bottom surface, the bottom surface facing a hand of a user when wearing the glove; at least one inner protective layer (225) having a thickness tᵢₚ, a top surface, and a bottom surface, the bottom surface abutting the top surface of the inner layer (230); an outer layer (210) having a thickness tₒ, a top surface, and a bottom surface, the bottom the bottom surface facing a disposed closer to the hand of a the user when wearing the glove;glove as compared to the top surface of the outer layer; at least one outer protective layer (215) having a thickness tₒₚ, a top surface, and a bottom surface, the top surface abutting the bottom surface of the outer layer (210); and at least one indicator layer (220) having a thickness t_{c} and that is disposed between the top surface of the inner protective layer (225) and the bottom surface of the outer protective layer (215), wherein the indicator layer comprises at least one pH indicator that generates a color visible at the top surface of the outer layer when the indicator layer is exposed to an aqueous medium, wherein the at least one inner protective layer (225) and the at least one outer protective layer (215) independently comprise a water-soluble polymer. The sum of tₒ, each tₒₚ, each tᵢₚ, each t_{c}, and each ti defines a total thickness

In another embodiment, optionally in combination with any other embodiment according to the dependent claims, the invention provides a method of forming a multilayer glove. The method comprises the steps of (a) dip coating a hand shaped former into a bath to form an outer layer (210) having a thickness tₒ; (b) forming an outer protective layer (215) having a thickness tₒₚ on the outer layer (210); (c) forming an indicator layer (220) having a thickness t_{c} on the outer protective layer (215), wherein the indicator layer comprises at least one pH indicator that generates a color when the indicator layer is exposed to an aqueous medium; (d) forming an inner protective layer (225) having a thickness tᵢₚ on the indicator layer (220); and (e) dip coating the product of step (d) into a bath to form an inner layer (230) having a thickness ti, wherein the sum of ti, tip, t_{c}, and tₒₚ is less than t_{c}, wherein the at least one inner protective layer (225) and the at least one outer protective layer (215) independently comprise a water-soluble polymer.

### BRIEF DESCRIPTION OF THE DRAWINGS

FIG. 1 is a block diagram illustrating a multilayer glove according to an example embodiment.
FIG. 2 is a cross section representation of a portion of a multilayer glove according to an example embodiment.
FIG. 3 is a block diagram of a multilayer glove showing a direct-printed indicator layer patch according to an example embodiment.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

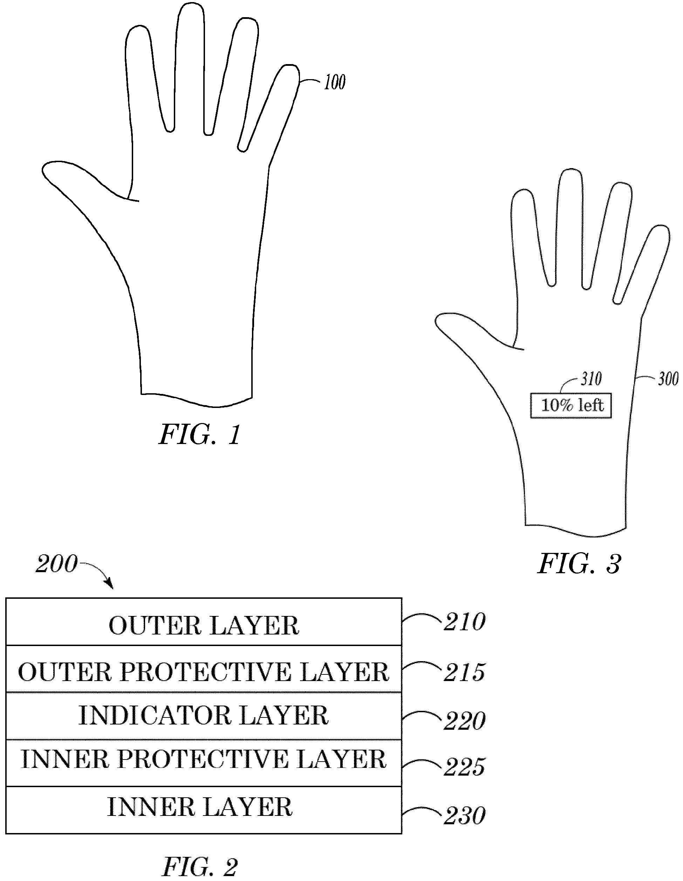

FIG. 1 is a representation of a multilayer glove 100. Outer and inner layers of the glove as described herein can be formed of latex or other protective materials such as nitrile, chlorosulphonated polyethylene, butyl rubber, and neoprene.

FIG. 2 illustrates a cross sectional view of a portion 200 of the multilayer glove 100. The inner layer 230 has a thickness ti. An inner protective layer 225 has a thickness tᵢₚ, an outer protective layer 215 has a thickness tₒₚ, and disposed between the inner protective 225 and outer protective 215 layers is an indicator layer 220, which has a thickness t_{c}. The sum of thicknesses tᵢ, tᵢₚ, t_{c}, and tₒₚ can be a pre-selected percentage of the total thickness T of the multilayer glove. In one embodiment, for instance, the sum of tᵢ, tᵢₚ, t_{c}, and tₒₚ is 10% of the total thickness T. The outer layer 210 has a thickness tₒ such that the sum of tᵢ, tᵢₚ, t_{c}, tₒₚ, and tₒ is equal to T. Thus, for instance, tₒ can be 90% of T according to one embodiment. In another embodiment, optionally in combination with any other embodiment, each t_{c} is independently 3 - 7% of T, such as 5% of T. The indicator layer changes color in response to its contact with a chemical or liquid medium, such as acid or base, and that permeates or diffuses through and/or erodes the outer layer.

FIG. 3 illustrates a representation of a multilayer glove 300 showing an outermost indicator layer 310 that is direct-printed to indicate the remaining lifetime of the glove. In this example, the direct-printed indicator layer is alphanumeric text reading "10% left." According to other embodiments described herein, the alphanumeric text can be direct-printed to convey other remaining glove lifetimes, such as "25% left" and "50% left."

The diffusion coefficient of the pH indicator through the liquid-filled nanopores of the gloves is strongly dependent on the size of the molecule. More specifically, one advantage of the indicator layer is that small molecule pH indicators have a high diffusion coefficient in the liquid state, and thus the time elapsed between the permeation of the outer 210 and outer protective 215 layers of the glove by liquid and the visualization of the color on the top surface of the multilayer glove 100 by the operator is minimum. Such a minimum response time of the indicator layer 220 is important for the safety of the operator. In accordance with some embodiments, the multilayer glove 100 is exposed to the liquid medium for a time equal to or exceeding the time required for the liquid medium to diffuse through the outer 210 and outer protective 215 layers and contact the indicator layer 220.

One example of a universal pH indicator is bromophenol blue. When bromophenol blue is exposed to a liquid, a yellow color is obtained for pH smaller than 3, multiple colors for pH between 3 and 4.6 (real pH indicator in this pH range), and blue color for pH greater than 4.6. The advantage of bromophenol blue is that it has the largest change in color hue, when the concentration of the observed sample increases or decreases.

In another example, if one needs a pH indicator for use of the multilayer glove 100 in only acid baths, then the indicator layer 220 can be based on methyl orange (C₁₄H₁₄N₃NaO₃S) because it indicates the presence of acids (pH between 0 and 6), indicating very well the strength of the acid. For other applications, where only bases are handled, the indicator layer can be based on phenolphthalein, which is colorless below 8.2 and pink above that value up to a pH of about 13. In even stronger basic solutions, the phenolphthalein becomes colorless.

Other examples of an indicator layer 220 are based upon mixtures of pH indicators. For instance, a first example of such an indicator layer is based on phenolphthalein (PPT) and methyl red (MR). Another example of mixed pH indicators are PPT and methyl orange (MO). Another example is PPT and neutral red (NR).

On the one hand, an indicator layer 220 based only on PPT will change in color from colorless to pink-fuchsia, when pH of a solution in contact with the layer increases from low pH values (acidic) to basic values with a pH transition region from 8.2 to 10, while for pH values higher than 12 it will become colorless, again. On the other hand, an indicator layer 220 based only on MR will change from red to yellow when the pH is increased from small pH value (acidic) to basic with a transition region from red to yellow in the pH range from 4 up to 6.4. Thus, by mixing two low molecule size pH indicators like PPT with MR, the indicator layer 220 will expose to an operator a red color in the acidic range and yellow to fuchsia in the basic range, which will thus eliminate the lack of color of PPT in the acidic medium, and thus being able to indicate by colorimetric principle that the glove consumed a portion of its lifetime a predetermined by the percentage tₒ/T.

Another example of an indicator layer 220 combines PPT with NR. NR has a pH transition region between 6.8 and 8, *i.e.*, at the transition between an acidic and basic medium.

The bottom layer 220 of the inner glove, which is in contact with the skin, is made of a chemically resistant material like latex, butyl, CSM/neoprene, neoprene, etc.

The inner protective 225 and outer protective 215 layers protect the indicator layer 220 by sealing it against exposure to aqueous media during fabrication of the glove 100. In this manner, basic baths that are used to form inner 230 and outer 210 layers do not prompt reaction with pH indicators in the indicator layer 220. For this purpose, the inner protective 225 and outer protective 215 layers are chosen from polymers that are water-soluble, wherein aqueous solutions of the polymers substantially maintain neutral pH, *i.e.*, pH 7. In addition, water solubility of the inner protective 225 and outer protective 215 layers in a manufactured glove 100 ensures rapid diffusion of acid or basic liquid media to the indicator layers 220, thereby preserving the ability of the glove to rapidly indicate remaining glove life to a user of the glove. For these purposes, a wide variety of water-soluble polymers and combinations thereof are used for the inner protective 225 and outer protective 215 layers. According to various embodiments, water-soluble polymers include polyvinyl alcohols (PVA); cellulose-derived polymers such as methylcellulose, hydroxypropyl cellulose (HPC), hydroxypropyl methylcellulose (HPMC), and the like; and polyvinylpyrrolidones (PVP). In some embodiments, the inner protective 225 and outer protective 215 layers further comprise a plasticizer that is also water-soluble. Examples of water-soluble plasticizers include those described herein, such as polyalkylene glycols. For instance, the plasticizer is a polyethylene glycol (PEG), such as PEG-400, and combinations of various PEGs known to those who are skilled in the art are contemplated as well.

According to various embodiments, the indicator layer 220 is formed not by dip coating, but by direct printing onto an inner protective layer 225, or if the glove 100 is formed by creating the outer layer 210 first, then the indicator layer 220 can be direct-printed onto the outer protective layer 215. In this manner, precise patterns of pH indicators and mixtures thereof are affixed to the inner protective layer 225. Thus, for instance, an inner layer 230 with ti, an inner protective layer 225 with tᵢₚ, and outer protective layer 215 with tₒₚ can support an indicator layer 220 with t_{c} and bearing alphanumeric text such as "10% left,", where tᵢ, tᵢₚ, tₒₚ, and t_{c} in combination represent 10% of total thickness T as a notification to the user of the glove. Hence, when the outer layer 210 with tₒ representing 90% of the total thickness T is compromised or worn away by a liquid medium, the indicator layer 220 is exposed to the liquid medium and immediately reacts, thereby showing the predetermined text or pattern to the glove user.

Some embodiments provide for multiple sets of inner 230, inner protective 225, indicator 220, and outer protective 215 layers, wherein each indicator layer 220 is located at a depth in the glove as determined by the cumulative thicknesses tᵢ, tᵢₚ, t_{c}, and tₒₚ that, in the aggregate, are present below a given indicator layer 220. In this manner, indicator layers residing at multiple depths in the glove that are direct-printed can be configured into certain patterns or alphanumeric text signaling remaining glove life to a user of the glove.

In some embodiments, each inner layer 230 bears the same thickness ti, wherein the indicator layer 220 direct-printed onto a given inner protective layer 225 bears a pattern or alphanumeric text corresponding to the depth of that inner protective layer 225. Examples include (tᵢ + tᵢₚ + t_{c} + tₒₚ)/T ratios of 10%, 20%, 25%, and 50%. Thus, in one example, a glove 100 can have an outer layer 210 with a thickness tₒ representing 50% T, and two sets of inner 230, inner protective 225, and outer protective 215 layers, each set having a cumulative thickness (tᵢ + tᵢₚ + t_{c} + tₒₚ) of 25% of T, wherein the outermost indicator layer 220 can be direct-printed to read "50% left", and the innermost indicator layer 220 can be direct-printed to read "25% left."

In other embodiments, the glove 100 has multiple sets of inner 230, inner protective 225, and outer protective 215 layers with different thicknesses ti in each set, wherein each indicator layer 220 that is direct-printed onto an inner layer 230 within each set is configured to convey to a user of the glove the percentage of remaining glove life. Thus, in one example of a glove 100, an innermost inner layer 230 and its corresponding inner protective 225, outer protective 215, and corresponding indicator 220 layers have a cumulative thickness (tᵢ + tᵢₚ + t_{c} + tₒₚ) that is 10% of total thickness T, wherein the indicator layer 220 that is direct-printed onto that inner layer 230 reads "10% left." The next innermost inner layer 230 and its corresponding inner protective 225, outer protective 215, and corresponding indicator 220 layers have a cumulative thickness (tᵢ + tᵢₚ + t_{c} + tₒₚ) that is 40% of total thickness T; hence, an indicator layer 220 direct-printed onto that inner layer 230 would read, for example, "50% left." In this example, the outer layer 210 would have a thickness tₒ equal to 50% of the total thickness T.

In the embodiments described above, an indicator layer 220 can be direct-printed with a pattern that is unique to that layer's depth in the glove. For instance, the pattern can be cross-hatches, dots, stripes, and the like. Alternatively, alphanumeric text can be direct-printed as a pattern so as to be visible to a user of the glove irrespective of the orientation of the glove.

One advantage of multiple sets of inner 230, inner protective 225, outer protective 215, and indicator 220 layers as described herein is useful indication to a user the remaining lifetime of various parts of the glove 100. For instance, layers of the glove 100 that are most often exposed to a harsh liquid medium and/or subject to most abrasion, such as fingertips and palm regions, can become compromised earlier than other regions of the glove. Hence, multiple sets of inner 230, inner protective 225, outer protective 215, and indicator 220 layers, each indicator layer 220 having a unique direct-printed pattern, can convey accurate and unambiguous information to a glove user on the remaining glove 100 lifetime for a particular region of the glove.

As described herein, various materials can be chosen for the inner and outer layers, and the skilled person can select various colors of those materials. In general, the colors of inner and outer layers are chosen to maximize the appearance of the indicator layer to a user of the glove. Thus, high contrast color schemes are most useful for this purpose. Examples of colors include white, yellow, and pastel shades of various other colors, so long as a user can discern the color produced, the pattern or alphanumeric text that appears, when an indicator layer is exposed to a liquid medium.

In general, the dip coating fabrication process of an exemplary protective glove consists of full immersion of a hand-shaped former (HSF) in multiple baths where the liquid state of the future layers are present. Different HSFs may be used for each hand and multiple HSFs may be used of varying sizes corresponding to different sizes of hands and protective gloves.

After each dip coating, a thermal treatment is applied for the solid state consolidation of the film, such as by passing the HSF through a furnace. At the end of the manufacturing process, the gloves are peeled off the HSF, and thus the last deposited layer on the glove will be the layer in contact with the skin. In some embodiments, the glove is not reversed when peeling it off from the HSF, or the glove may be turned inside out after peeling off. This allows an inner layer 230 to be formed first followed by inner protective 225 and indicator 220 layers.

Indicator layers 220 that are direct-printed can be achieved by various methods known to the skilled person. For instance, according to some embodiments, direct-printing can be achieved by a 3D printer.

In the embodiments described herein, one or more dip-coating steps in the manufacturing process can be replaced by direct-printing. In some embodiments, all steps for making the multilayer glove 100 are achieved by direct-printing, such as with a 3D printer. An advantage to direct-printing is the avoidance of material waste that is left over by dip-coating baths. Hence, direct-printing achieves essentially 100% efficiency in the use of glove material(s).

The indicator layer 220 can be made from a composition comprising one or more pH indicators, as illustrated in the examples below. In general, the pH indicators are dissolved in a mixture of water and a branched or straight (C₁₋₅)-alkyl alcohol, such as methanol or ethanol, and mixtures of such alcohols.

One or more water-soluble binders is added to the pH indicator solution. Suitable binders include polyvinylalcohols, starches, carboxymethylcellulose, methylcellulose, hydroxypropyl methylcellulose, dextrin, polyethylene glycols, lignosulfates, and polyacrylates. An exemplary binder is methylcellulose.

The pH indicator composition also comprises one or more water soluble plasticizers useful to increase the fluidity of the composition. Examples of plasticizers include glycerins, polyethylene glycols, polyethylene glycol monomethyl ethers, propylene glycols, sorbitol and sorbitan.

The pH indicator composition is stirred to obtain a homogeneous and viscous solution. The composition thus prepared is suitable as a bath for the dip-coating manufacturing process described below. Alternatively, according to some embodiments, the composition can be used in a direct-printing process for applying the indicator layer. In these embodiments, viscosity of the pH indicator composition is readily adjusted so as to promote even coverage of the pH indicator(s) throughout the indicator layer.

### EXAMPLES

### Example 1: Preparation of Indicator Layer Solution

This example illustrates a process for making a solution of small molecule pH indicators useful in subsequent procedures for making an indicator layer in a multilayer glove.

Phenolphthalein and methyl red are dissolved in ethanol. Optionally, the resulting solution is combined and mixed with a solution of polyvinylalcohol in warm water. To the resulting solution, a plasticizer such as polyethylene glycol and, optionally, a binder such as methylcellulose are added. The final mixture is then stirred to obtain a homogeneous and viscous solution of phenolphthalein and methyl red

### Example 2: Manufacture of Multilayer Glove

An example of a standard all-dip-coating fabrication process of a smart latex glove containing a single color change layer indicating 10% lifetime left before removal (NESLI indicator) is as follows:
1. Dip coating of HSF into coagulant agent based on calcium nitrate
2. Dip coating of the hand-shape former (HSF) into the "nitrile" bath for getting a nitrile film of thickness equal to 90% from the total desired thickness of nitrile film.
3. Thermal treatment of the dip-coated HSF for obtaining a solid state of the first nitrile film.
4. Dip coating of the HSF from step 3 into a bath containing PVA-PEG 400 for preparing the outer protective layer
5. Thermal treatment of the HSF from step 4 for getting solid state outer protective layer.
6. Dip-coating of the HSF from step 5 into a bath containing colorimetric solution (PVA-PEG 400 and PPT and MR) as described above.
7. Thermal treatment of the HSF from the step 6
8. Dip coating of the HSF from step 7 into a bath containing PVA-PEG 400 for preparing the inner protective layer.
9. Thermal treatment of the HSF from step 8 for getting solid state inner protective layer.
10. Dip coating of the HSF from step 9 into the "nitrile" bath for getting a nitrile film of thickness equal to 10% of thickness of the total desired thickness of nitrile film.
11. Thermal treatment of the hand-shape former from step 5.
12. Dip coating of the HSF from step 11 into the glue bath.
13. Adding the liner to the HSF from step 13
14. Final treatment of HSF from step 13 for robust gluing the liner to the HSF
15. Glue drying at a mild thermal treatment of the HSF from step 12

As an alternative, the outer layer, the indicator layer, the inner protective and outer protective layers, and the inner layer can be deposited in the sequence described above, but a single thermal treatment is made at the end.

### Example 3: Manufacture of Multilayer Glover With Direct-Printed Indicator Layer

This example demonstrates the manufacture of a multilayer glove in which an indicator layer is direct-printed to reveal a desired pattern, such as alphanumeric characters, as a service life indicator. The procedure is analogous to that in Example 2, except that step 6 is replaced by direct printing of an indicator layer solution such as from Example 1 on selective areas of the HSF from step 5 for creating the text "10% LEFT."

## Claims

1. A multilayer glove (100) comprising:
at least one inner layer (230) having a thickness ti, a top surface, and a bottom surface, the bottom surface facing a hand of a user when wearing the glove;
at least one inner protective layer (225) having a thickness tip, a top surface, and a bottom surface, the bottom surface abutting the top surface of the inner layer (230);
an outer layer (210) having a thickness to, a top surface, and a bottom surface, the bottom surface disposed closer to the hand of the user when wearing the glove as compared to the top surface of the outer layer;
at least one outer protective layer (215) having a thickness top, a top surface, and a bottom surface, the top surface abutting the bottom surface of the outer layer (210); and
at least one indicator layer (220) having a thickness tc disposed between the top surface of the inner protective layer (225) and the bottom surface of the outer protective layer (215), wherein the indicator layer comprises at least one pH indicator that generates a color visible at the top surface of the outer layer when the indicator layer is exposed to an aqueous medium,
wherein the sum of tₒ, each top, each tc, each tip, and each ti defines a total thickness T.
wherein the at least one inner protective layer (225) and the at least one outer protective layer (215) independently comprise a water-soluble polymer.

2. The multilayer glove (100) according to claim 1, wherein the indicator layer (220) comprises two or more different pH indicators, each indicator being responsive to different ranges of pH, respectively.

3. The multilayer glove (100) according to claim 1, wherein each ti, tip, top, and tc is less than to.

4. The multilayer glove (100) according to claim 1, wherein the pH indicator is selected from the group consisting of bromophenol blue, bromothymol blue, phenolphthalein, methyl red, methyl orange, neutral red, and combinations thereof.

5. The multilayer glove (100) according to claim 1, wherein the outer layer and each inner layer independently comprise at least one member selected from the group consisting of latex, nitrile, chlorosulphonated polyethylene, butyl rubber, and neoprene.

6. The multilayer glove (100) according to claim 1, wherein each inner protective layer and each outer protective layer independently comprise one or more of polyvinyl alcohol and polyethylene glycol.

7. The multilayer glove (100) according to claim 1, further comprising one or more additional sets of inner (230), inner protective (225), indicator (220), and outer protective (215) layers, each indicator layer (220) being disposed between the top surface of its corresponding inner protective layer (225) and the bottom surface of its corresponding outer protective layer (215).

8. The multilayer glove (100) according to claim 7, wherein each indicator layer (220) comprises a pH indicator or combination of pH indicators that is different than pH indicators in other indicator layers.

9. The multilayer glove (100) according to claim 7, wherein the sum of each ti, tip, tc and top is 10 to 15% of T.

10. The multilayer glove (100) according to claim 7, wherein the pH indicator in each indicator layer (220) is present as alphanumeric text corresponding to the sum of remaining sums of thicknesses ti, tip, tc and top expressed as a percentage of T.

11. The multilayer glove (100) according to claim 1, wherein each outer layer (210) and inner layer (230) consists of latex, nitrile, chlorosulphonated polyethylene, butyl rubber, or neoprene; each inner protective layer (225) and outer protective layer (215) consists of polyvinyl alcohol and polyethylene glycol; and the pH indicator is a combination of phenolphthalein and methyl red.

12. A method of forming a multilayer glove (100), the method comprising
a. dip coating a hand shaped former into a bath to form an outer layer (210) having a thickness to;
b. forming an outer protective layer (215) having a thickness top on the outer layer (210);
c. forming an indicator layer (220) having a thickness tc on the outer protective layer (215), wherein the indicator layer comprises at least one pH indicator that generates a color when the indicator layer is exposed to an aqueous medium;
d. forming an inner protective layer (225) having a thickness tip on the indicator layer (220); and
e. dip coating the product of step (d) into a bath to form an inner layer (230) having a thickness ti, wherein the sum of ti, tip, tc, and top is less than tₒ,
wherein the inner protective layer (225) and the outer protective layer (215) independently comprise a water-soluble polymer.

13. The method according to claim 12, wherein the forming of an indicator layer (220) on the outer protective layer (215) comprises dip coating the hand shaped former having the outer protective layer (215) into a composition comprising the pH indicator to form the indicator layer (220).

14. The method according to claim 13, wherein the composition further comprises an alcohol, water, a binder, and a plasticizer.

15. The method according to claim 12, wherein steps (b), (c), (d), and (e) are repeated to form successive sets of outer protective (215), indicator (220), inner protective (225), and inner (230) layers.

## Patentansprüche

1. Mehrschichthandschuh (100), umfassend:
mindestens eine innere Schicht (230) mit einer Dicke ti, einer oberen Oberfläche und einer unteren Oberfläche, wobei die untere Oberfläche einer Hand eines Benutzers beim Tragen des Handschuhs zugewandt ist;
mindestens eine innere Schutzschicht (225) mit einer Dicke tip, einer oberen Oberfläche und einer unteren Oberfläche, wobei die untere Oberfläche an der oberen Oberfläche der inneren Schicht (230) anliegt;
eine äußere Schicht (210) mit einer Dicke to, einer oberen Oberfläche und einer unteren Oberfläche, wobei die untere Oberfläche beim Tragen des Handschuhs im Vergleich zur oberen Oberfläche der äußeren Schicht näher an der Hand des Benutzers angeordnet ist;
mindestens eine äußere Schutzschicht (215) mit einer Dicke top, einer oberen Oberfläche und einer unteren Oberfläche, wobei die obere Oberfläche an der unteren Oberfläche der äußeren Schicht (210) anliegt; und
mindestens eine Indikatorschicht (220) mit einer Dicke tc, die zwischen der oberen Oberfläche der inneren Schutzschicht (225) und der unteren Oberfläche der äußeren Schutzschicht (215) angeordnet ist, wobei die Indikatorschicht mindestens einen pH-Indikator umfasst, der eine Farbe erzeugt, die an der oberen Oberfläche der äußeren Schicht sichtbar ist, wenn die Indikatorschicht einem wässrigen Medium ausgesetzt wird,
wobei die Summe von to, jeder top, jeder tc, jeder tip und jeder ti eine Gesamtdicke T definiert.
wobei die mindestens eine innere Schutzschicht (225) und die mindestens eine äußere Schutzschicht (215) unabhängig ein wasserlösliches Polymer umfassen.

2. Mehrschichthandschuh (100) nach Anspruch 1, wobei die Indikatorschicht (220) zwei oder mehr verschiedene pH-Indikatoren umfasst, wobei jeder Indikator jeweils auf unterschiedliche pH-Bereiche reagiert.

3. Mehrschichthandschuh (100) nach Anspruch 1, wobei jede ti, tip, top und tc kleiner als to ist.

4. Mehrschichthandschuh (100) nach Anspruch 1, wobei der pH-Indikator ausgewählt ist aus der Gruppe, bestehend aus Bromphenolblau, Bromthymolblau, Phenolphthalein, Methylrot, Methylorange, Neutralrot und Kombinationen davon.

5. Mehrschichthandschuh (100) nach Anspruch 1, wobei die äußere Schicht und jede innere Schicht unabhängig voneinander mindestens ein Element umfassen, ausgewählt aus der Gruppe, bestehend aus Latex, Nitril, chlorsulfoniertem Polyethylen, Butylkautschuk und Neopren.

6. Mehrschichthandschuh (100) nach Anspruch 1, wobei jede innere Schutzschicht und jede äußere Schutzschicht unabhängig einen oder mehrere von Polyvinylalkohol und Polyethylenglykol umfassen.

7. Mehrschichthandschuh (100) nach Anspruch 1, ferner umfassend einen oder mehrere zusätzliche Sätze von innerer (230), innerer Schutz- (225), Indikator- (220) und äußerer Schutzschicht (215), wobei jede Indikatorschicht (220) zwischen der oberen Oberfläche ihrer entsprechenden inneren Schutzschicht (225) und der unteren Oberfläche ihrer entsprechenden äußeren Schutzschicht (215) angeordnet ist.

8. Mehrschichthandschuh (100) nach Anspruch 7, wobei jede Indikatorschicht (220) einen pH-Indikator oder eine Kombination von pH-Indikatoren umfasst, die sich von pH-Indikatoren in anderen Indikatorschichten unterscheidet.

9. Mehrschichthandschuh (100) nach Anspruch 7, wobei die Summe von jeder ti, tip, tc und top 10 bis 15 % von T beträgt.

10. Mehrschichthandschuh (100) nach Anspruch 7, wobei der pH-Indikator in jeder Indikatorschicht (220) als alphanumerischer Text vorliegt, der der Summe der verbleibenden Summen der Dicken ti, tip, tc und top entspricht, ausgedrückt als Prozentsatz von T.

11. Mehrschichthandschuh (100) nach Anspruch 1, wobei jede äußere Schicht (210) und innere Schicht (230) aus Latex, Nitril, chlorsulfoniertem Polyethylen, Butylkautschuk oder Neopren besteht; jede innere Schutzschicht (225) und äußere Schutzschicht (215) aus Polyvinylalkohol und Polyethylenglykol besteht; und der pH-Indikator eine Kombination von Phenolphthalein und Methylrot ist.

12. Verfahren zum Bilden eines Mehrschichthandschuhs (100), wobei das Verfahren umfasst
a. Tauchbeschichten eines handförmigen Formers in einem Bad, um eine äußere Schicht (210) mit einer Dicke to zu bilden;
b. Bilden einer äußeren Schutzschicht (215) mit einer Dicke top auf der äußeren Schicht (210);
c. Bilden einer Indikatorschicht (220) mit einer Dicke tc auf der äußeren Schutzschicht (215), wobei die Indikatorschicht mindestens einen pH-Indikator umfasst, der eine Farbe erzeugt, wenn die Indikatorschicht einem wässrigen Medium ausgesetzt wird;
d. Bilden einer inneren Schutzschicht (225) mit einer Dicke tip auf der Indikatorschicht (220); und
e. Tauchbeschichten des Produkts von Schritt (d) in einem Bad, um eine innere Schicht (230) mit einer Dicke ti zu bilden, wobei die Summe von ti, tip, tc und top kleiner als to ist,
wobei die innere Schutzschicht (225) und die äußere Schutzschicht (215) unabhängig voneinander ein wasserlösliches Polymer umfassen.

13. Verfahren nach Anspruch 12, wobei das Bilden einer Indikatorschicht (220) auf der äußeren Schutzschicht (215) das Tauchbeschichten des handförmigen Formers mit der äußeren Schutzschicht (215) in einer Zusammensetzung umfasst, die den pH-Indikator umfasst, um die Indikatorschicht (220) zu bilden.

14. Verfahren nach Anspruch 13, wobei die Zusammensetzung ferner einen Alkohol, Wasser, ein Bindemittel und einen Weichmacher umfasst.

15. Verfahren nach Anspruch 12, wobei die Schritte (b), (c), (d) und (e) wiederholt werden, um aufeinanderfolgende Sätze von äußerer Schutz- (215), Indikator- (220), innerer Schutz-(225) und innerer Schicht (230) zu bilden.

## Revendications

1. Gant multicouche (100) comprenant :
au moins une couche interne (230) ayant une épaisseur ti, une surface supérieure et une surface inférieure, la surface inférieure faisant face à une main d'un utilisateur lorsqu'il porte le gant ;
au moins une couche protectrice interne (225) ayant une épaisseur tip, une surface supérieure et une surface inférieure, la surface inférieure venant en butée contre la surface supérieure de la couche interne (230) ;
une couche externe (210) ayant une épaisseur to, une surface supérieure et une surface inférieure, la surface inférieure étant disposée plus près de la main de l'utilisateur lorsqu'il porte le gant par rapport à la surface supérieure de la couche externe ;
au moins une couche protectrice externe (215) ayant une épaisseur top, une surface supérieure et une surface inférieure, la surface supérieure venant en butée contre la surface inférieure de la couche externe (210) ; et
au moins une couche indicatrice (220) ayant une épaisseur tc disposée entre la surface supérieure de la couche protectrice interne (225) et la surface inférieure de la couche protectrice externe (215), la couche indicatrice comprenant au moins un indicateur de pH qui génère une couleur visible sur la surface supérieure de la couche externe lorsque la couche indicatrice est exposée à un milieu aqueux,
la somme de to, de chaque top, de chaque tc, de chaque tip et de chaque ti définissant une épaisseur totale T.
dans lequel l'au moins une couche protectrice interne (225) et l'au moins une couche protectrice externe (215) comprennent indépendamment un polymère hydrosoluble.

2. Gant multicouche (100) selon la revendication 1, dans lequel la couche indicatrice (220) comprend au moins deux indicateurs de pH différents, chaque indicateur étant respectivement sensible à différentes plages de pH.

3. Gant multicouche (100) selon la revendication 1, dans lequel chaque ti, chaque tip, chaque top et chaque tc est inférieur à to.

4. Gant multicouche (100) selon la revendication 1, dans lequel l'indicateur de pH est choisi dans le groupe constitué du bleu de bromophénol, du bleu de bromothymol, de la phénolphtaléine, du rouge de méthyle, de l'orange de méthyle, du rouge neutre et de leurs combinaisons.

5. Gant multicouche (100) selon la revendication 1, dans lequel la couche externe et chaque couche interne comprennent indépendamment au moins un élément choisi dans le groupe constitué du latex, du nitrile, du polyéthylène chlorosulfoné, du caoutchouc butyle et du néoprène.

6. Gant multicouche (100) selon la revendication 1, dans lequel chaque couche protectrice interne et chaque couche protectrice externe comprennent indépendamment un alcool polyvinylique et du polyéthylène glycol.

7. Gant multicouche (100) selon la revendication 1, comprenant en outre un ou plusieurs ensembles supplémentaires de couches internes (230), de couches protectrices internes (225), de couches indicatrices (220) et de couches protectrices externes (215), chaque couche indicatrice (220) étant disposée entre la surface supérieure de sa couche protectrice interne correspondante (225) et la surface inférieure de sa couche protectrice externe correspondante (215).

8. Gant multicouche (100) selon la revendication 7, dans lequel chaque couche indicatrice (220) comprend un indicateur de pH ou une combinaison d'indicateurs de pH qui diffère des indicateurs de pH des autres couches indicatrices.

9. Gant multicouche (100) selon la revendication 7, dans lequel la somme de chaque ti, de chaque tip, de chaque tc et de chaque top représente 10 à 15 % de T.

10. Gant multicouche (100) selon la revendication 7, dans lequel l'indicateur de pH de chaque couche indicatrice (220) est présent sous forme de texte alphanumérique correspondant à la somme des sommes restantes des épaisseurs ti, de tip, de tc et de top, exprimées en pourcentage de T.

11. Gant multicouche (100) selon la revendication 1, dans lequel chaque couche externe (210) et chaque couche interne (230) sont constituées de latex, de nitrile, de polyéthylène chlorosulfoné, de caoutchouc butyle ou de néoprène ; chaque couche protectrice interne (225) et chaque couche protectrice externe (215) sont constituées d'un alcool polyvinylique et de polyéthylène glycol ; et l'indicateur de pH est une combinaison de phénolphtaléine et de rouge de méthyle.

12. Procédé de formation d'un gant multicouche (100), le procédé comprenant
a. l'enrobage par trempage d'un gabarit en forme de main dans un bain permettant de former une couche externe (210) ayant une épaisseur to ;
b. la formation d'une couche protectrice externe (215) ayant une épaisseur top sur la couche externe (210) ;
c. la formation d'une couche indicatrice (220) ayant une épaisseur tc sur la couche protectrice externe (215), la couche indicatrice comprenant au moins un indicateur de pH qui génère une couleur lorsque la couche indicatrice est exposée à un milieu aqueux ;
d. la formation d'une couche protectrice interne (225) ayant une épaisseur tip sur la couche indicatrice (220) ; et
e. l'enrobage par trempage du produit de l'étape (d) dans un bain pour former une couche interne (230) ayant une épaisseur ti, la somme de ti, de tip, de tc et de top étant inférieure à to,
la couche protectrice interne (225) et la couche protectrice externe (215) comprenant indépendamment un polymère hydrosoluble.

13. Procédé selon la revendication 12, dans lequel la formation d'une couche indicatrice (220) sur la couche protectrice externe (215) comprend l'enrobage par trempage du gabarit en forme de main ayant la couche protectrice externe (215) dans une composition comprenant l'indicateur de pH pour former la couche indicatrice (220).

14. Procédé selon la revendication 13, dans lequel la composition comprend en outre un alcool, de l'eau, un liant et un plastifiant.

15. Procédé selon la revendication 12, dans lequel les étapes (b), (c), (d) et (e) sont répétées pour former des ensembles successifs de couches protectrices externes (215), de couches indicatrices (220), de couches protectrices internes (225) et de couches internes (230).
